# EUROPEAN PATENT SPECIFICATION

(11) **EP 2 749 364 B1**
(45) Date of publication and mention of the grant of the patent: **01.05.2019**
(21) Application number: 12825292.1
(22) Date of filing: 17.08.2012
(51) Int. Cl.: B21D 22/00, G06F 17/50

(54) **METHOD AND DEVICE FOR CONFIRMING PRESS MOLDED PRODUCT SPRINGBACK COUNTERMEASURE EFFECT**
VERFAHREN UND VORRICHTUNG ZUR BESTÄTIGUNG DER WIRKUNG VON MASSNAHMEN GEGEN RÜCKVERFORMUNG BEI PRESSGEFORMTEN PRODUKTEN
PROCÉDÉ ET DISPOSITIF PERMETTANT DE CONFIRMER L'EFFET D'UNE MESURE DE PRÉVENTION DU RETOUR ÉLASTIQUE D'UN PRODUIT MOULÉ À LA PRESSE

(30) Priority: 22.08.2011 JP 2011180330
(43) Date of publication of application: 02.07.2014
(73) Proprietor: JFE Steel Corporation, Tokyo 100-0011 (JP)
(72) Inventor: TOKITA, Yuichi, Tokyo 100-0011 (JP); ISHIWATARI, Akinobu, Tokyo 100-0011 (JP)
(74) Representative: Haseltine Lake LLP
(86) International application number: PCT/JP2012/005185
(87) International publication number: WO 2013/027378

(56) References cited:
- EP-A1- 1 908 539
- EP-A1- 2 058 062
- EP-A1- 2 062 663
- WO-A1-2010/038539
- JP-A- 2007 229 724
- JP-A- 2007 229 724
- JP-A- 2008 087 015
- JP-A- 2008 087 035
- JP-A- 2008 087 035
- JP-A- 2008 090 481
- JP-A- 2008 142 774
- JP-A- 2009 148 838
- JP-A- 2009 172 677

## Description

### Technical Field

The present invention relates to a technique to reduce springback in press-forming of, for example, an automotive body structural part constituting an automotive body. In particular, the invention relates to a method and apparatus for identifying the effect of changing a press-forming condition to reduce springback.

### Background

In press-forming, after a press-formed part is released from a die (after release), springback (elastic recovery) may often occur in the press-formed part, thus causing the shape of the part to differ from an intended shape. It is known that springback is caused due to an uneven distribution of residual stress in a pre-release part. Springback has been estimated using numerical analysis, such as a finite element method.

In particular, for reduction in cost and the number of development steps, at the start of a stage for designing an automobile, a designing stage for studying methods of press-forming a part has recently tended to be started. Accordingly, computers are used to analyze press-forming on the basis of the shape of a press-formed part and press-forming conditions, obtain a pre-release residual stress state, and calculate an estimated amount of after-release springback in the press-formed part on the basis of the residual stress after press-forming. The press-forming conditions, for example, the shape of a die, are changed by the amount of springback.

In the above-described manner of changing the press-forming conditions, it is difficult to directly know which area the change of the press-forming conditions has changed residual stress in and the extent to which springback has been affected. As disclosed in Patent Literature 1, therefore, a press-forming analysis method has been developed that estimates an area associated with residual stress dominating springback in a part.

According to the press-forming analysis method disclosed in Patent Literature 1, residual stress in a specific area of a part is changed and the influence of changed residual stress on springback is analytically revealed.

### Citation List

### Patent Literature

PTL 1: Japanese Unexamined Patent Application Publication No. 2007-229724

### Summary of Invention

### Technical Problem

As pointed out in Patent Literature 1, which area in the shape of a press-formed part the change of the press-forming conditions has affected a stress state in cannot be revealed by the method of determining a change in stress state between before and after release while changing the press-forming conditions.

As a countermeasure for reducing springback, for example, press-forming conditions are changed in order to reduce a change in residual stress between before and after release in a certain area in the shape of a part. If it results in a reduction in change in residual stress between before and after release in this area and springback is accordingly reduced, it is difficult to determine whether such an effect is obtained by the countermeasure for reducing springback. The reason is as follows. Since changing the press-forming conditions causes a change in stress state in all areas in the shape of the part, it is difficult to distinguish a case where the change of the press-forming conditions has affected a target area to reduce a change in residual stress in this area and springback has accordingly been effectively reduced from a case where the change of the press-forming conditions has affected another area to reduce a change in residual stress in this area and springback has been accidentally reduced.

On the other hand, according to the press-forming analysis method disclosed in Patent Literature 1, a pre-release residual stress distribution in a specific area in the shape of a part is changed on analysis data. Accordingly, the relationship between a change in stress state and a reduction in springback can be clearly understood.

If it is revealed that a change in pre-release residual stress distribution in a specific area affects a reduction in springback, however, there is still a challenge to know how to change the press-forming conditions in order to change the residual stress distribution in the area.

As described above, there is no means for clearly understanding the relationship between a change of press-forming conditions, as a countermeasure for reducing springback, and a change in stress state in the entire shape of a part between before and after release. Disadvantageously, it is difficult to appropriately evaluate the effect of changing the press-forming conditions as a countermeasure for reducing springback.

The present invention has been made to solve the above-described disadvantages and provides a method and apparatus for identifying the effect of a countermeasure for reducing springback, the method and apparatus capable of clarifying the relationship between a change of press-forming conditions as a countermeasure for reducing springback and a change in stress state in the entire shape of a part between before and after release.

### Solution to Problem

(1) The present invention provides a method for identifying an effect of a countermeasure for reducing springback in press-forming and an apparatus for identifying an effect of a countermeasure for reducing springback in press-forming as defined in the appended claims.

### Advantageous Effects of Invention

According to the effect identifying method of the countermeasure for reducing springback according to the present invention, it can be clearly identified the portion of a press-formed part in which a certain countermeasure for reducing springback has affected and the extent to which a change in amount of springback has been achieved in upon press-forming.

### Brief Description of Drawings

Fig. 1 is a block diagram of a countermeasure effect identifying apparatus for reducing springback according to the present invention.
Fig. 2 is a flowchart illustrating a process to which a method for identifying the effect of a countermeasure for reducing springback according to the present invention is applied.
Fig. 3 includes diagrams illustrating a designed shape of a press-formed part to be analyzed in an embodiment of the present invention.
Fig. 4 is a diagram explaining a press die set for analytical calculation in the embodiment of the present invention.
Fig. 5 includes diagrams schematically sequentially illustrating press-drawing, blank trimming after press-drawing, and springback analysis in the embodiment of the present invention.
Fig. 6 includes diagrams explaining a press die set before a countermeasure for reducing springback and the press die set after the countermeasure for reducing springback in the embodiment of the present invention.
Fig. 7 includes diagrams schematically illustrating a process of displaying a residual stress distribution difference variation in contour plots in the embodiment of the present invention.
Fig. 8 is a diagram explaining a designed press-formed part and amounts of springback in curved portion of the press-formed part before and after the countermeasure for reducing springback in the embodiment of the present invention.

### Description of Embodiments

Embodiments of the present invention will be described with reference to the drawings.

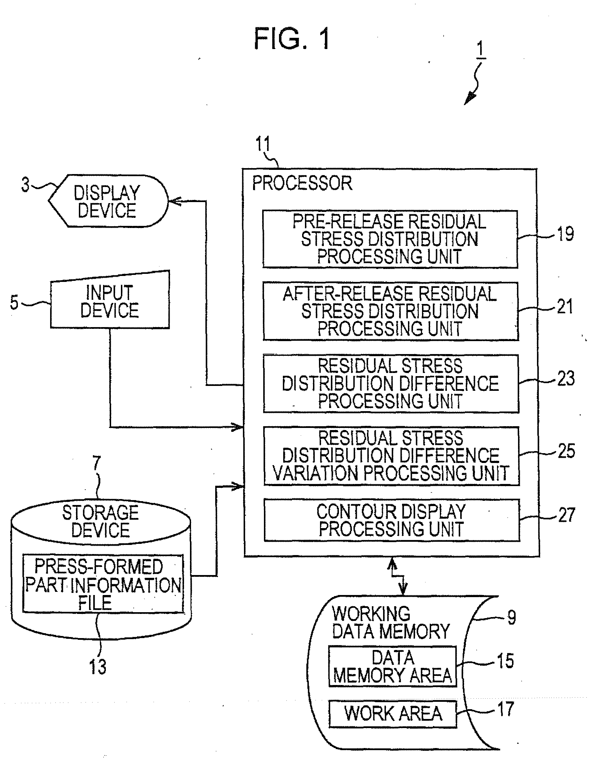

The configuration of an apparatus 1 for identifying the effect of a countermeasure for reducing springback in press-forming (hereinafter, simply referred to as a "countermeasure effect identifying apparatus for reducing springback 1") will be described with reference mainly to a block diagram illustrated in Fig. 1 and appropriately to other figures.

In this embodiment, the countermeasure effect identifying apparatus for reducing springback 1 includes a PC (personal computer) and includes a display device 3, an input device 5, a storage device 7, a working data memory 9, and a processor 11.

Furthermore, the display device 3, the input device 5, the storage device 7, and the working data memory 9 are connected to the processor 11.

### <Display Device>

The display device 3 is used to display a result of calculation, for example, and includes a liquid crystal display monitor.

### <Input Device>

The input device 5 is used to specify a press-formed part information file 13, for example, and includes a keyboard and a mouse.

### <Storage Device>

The storage device 7 stores at least the press-formed part information file 13.

### <Working Data Memory>

The working data memory 9 includes a data memory area 15 to store a result of calculation and a work area 17 for calculation.

### <Processor>

The processor is constituted by a CPU of the PC. The CPU implements predetermined programs, thus achieving processing units which will be described below.

The processor 11 includes a pre-release residual stress distribution processing unit 19, an after-release residual stress distribution processing unit 21, a residual stress distribution difference processing unit 23, a residual stress distribution difference variation processing unit 25, and a contour display processing unit 27.

The processing units in the processor 11 will be described in more detail below.

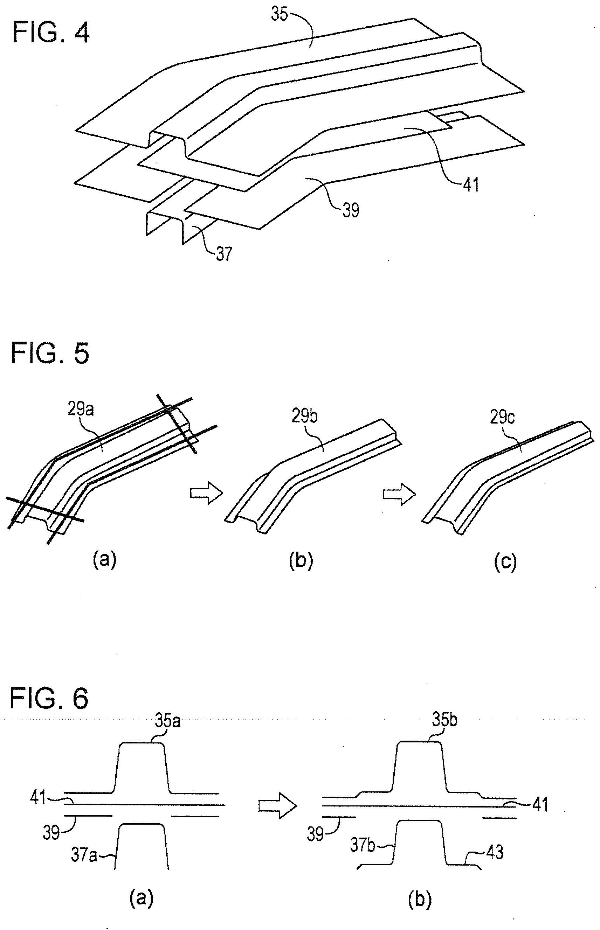

The pre-release residual stress distribution processing unit 19 analyzes press-forming on a blank 41, calculates a residual stress distribution in a pre-release shape 29b (refer to Fig. 5(b)), and stores the result of calculation as residual stress distribution data related to the pre-release shape 29b in the data memory area 15.

The after-release residual stress distribution processing unit 21 reads the residual stress distribution data related to the pre-release shape 29b from the data memory area 15, calculates a residual stress distribution in an after-release shape 29c (refer to Fig. 5(c)) on the basis of the read residual stress distribution related to the pre-release shape 29b, and stores the result of calculation as residual stress distribution data related to the after-release shape 29c in the data memory area 15.

The residual stress distribution difference processing unit 23 reads the residual stress distribution data related to the pre-release shape 29b and the residual stress distribution data related to the after-release shape 29c from the data memory area 15, converts these data items into a local coordinate system, calculates a stress difference therebetween, and stores the result of calculation as residual stress distribution difference in the data memory area 15.

To enable comparison of first stress difference data and second stress difference data obtained by calculations under different press-forming conditions, the residual stress distribution difference variation processing unit 25 generates mapping data by mapping values of first residual stress distribution difference data to shape data related to the second residual stress distribution difference data, calculates a stress difference on the basis of the mapping data and the second residual stress distribution difference data which is not subjected to mapping, and stores the result of calculation as residual stress distribution difference variation data in the data memory area 15.

The contour display processing unit 27 reads the residual stress distribution difference variation data from the data memory area 15 and allows the display device 3 to display the data in contour plots.

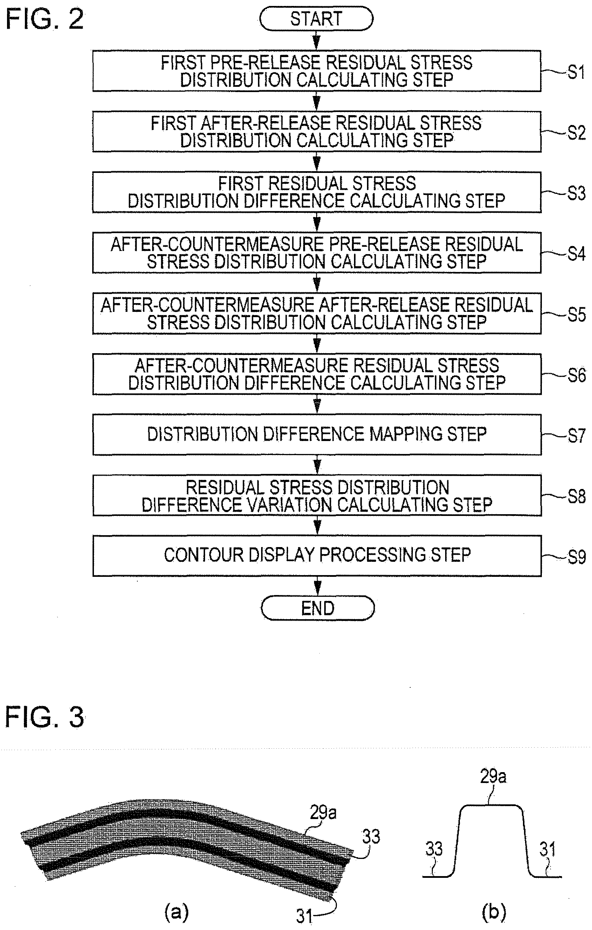

The shape of a press-formed part and an outline of a method of press-forming will be described below with reference to Figs. 3 to 6. A method for identifying the effect of a countermeasure for reducing springback in press-forming of a press-formed part 29a illustrated in Fig. 3(a) will be described as an example.

Analytical calculation in press-forming analysis and springback analysis is performed using a commercially available finite element method (FEM) analysis system.

The press-formed part 29a has a hat-shaped cross-section (refer to Fig. 3(b)) and is gently curved V-shaped. The press-formed part 29a has an inner flange 31 on its inwardly curved side and an outer flange 33 on the side opposite from the inwardly curved side.

The press-formed part 29a has been pressed using a press die set composed of a die 35, a punch 37, and a blank holder 39 which are illustrated in Fig. 4.

In the present embodiment, for example, a 980 MPa grade high-strength cold-rolled steel sheet is used as the blank 41.

The press-formed part 29a, which has an intended shape, is formed by press-drawing the blank 41 with the press die set (refer to Fig. 5(a)). Edges of the press-formed part are trimmed such that the part has the pre-release shape 29b (refer to Fig. 5(b)). The pre-release shape 29b is subjected to springback analysis. Then, the after-release shape 29c is provided (refer to Fig. 5(c)).

Note that upon press-forming, springback occurs in the press-formed part 29a such that walls of the part are slightly diverged outwardly in the hat-shaped cross-section.

In the present invention, a press-forming condition before a countermeasure for reducing springback is set will be referred to as a first press-forming condition ("first" in the invention of the present application) and a press-forming condition after an initial or additional springback is set will be referred to as an after-countermeasure press-forming condition ("after-countermeasure" in the invention of the present application). Specifically, the first press-forming condition includes a case where no countermeasure for reducing springback may be set or any countermeasure for reducing springback has already been set. The after-countermeasure press-forming condition means a case where any countermeasure for reducing springback is set in addition to the first press-forming condition.

In the present embodiment, it is assumed that the first press-forming condition is a condition that no countermeasure for reducing springback is set (hereinafter, simply referred to as "pre-countermeasure for reducing springback ") and the after-countermeasure press-forming condition is a condition that an initial antispringback is set (hereinafter, simply referred to as "after-countermeasure for reducing springback").

A countermeasure for reducing springback is based on the premise that the shape of a press-formed part is not changed, because data items obtained before and after the countermeasure for reducing springback are developed on the same coordinate system and are compared. Note that portion to be released by trimming may be changed in shape. Accordingly, the countermeasure for reducing springback is, for example, changing of the shape of die set portion that is not relevant to a press-formed part or changing of a blank holder pressure.

The countermeasure for reducing springback in the present embodiment is to allow each die face of the press die set to have a step 43 (refer to Fig. 6(b)). Since the step 43 corresponds to part to be released by trimming, the countermeasure for reducing springback is changing of die set portion that is not relevant to a press-formed part. This countermeasure is intended to reduce springback by application of tensile stress to the walls of the press-formed part 29a at completion of press-forming. This embodiment is intended to identify how the countermeasure effectively reduces springback.

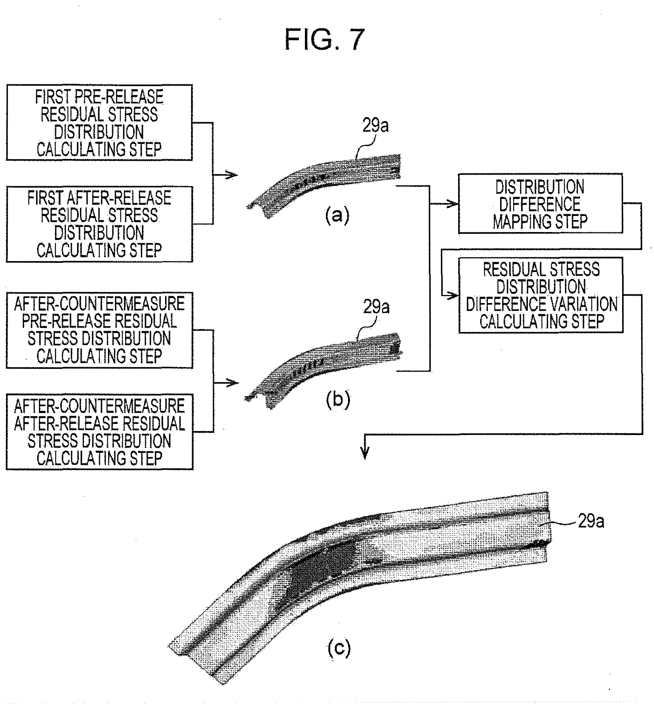

The flow of a process corresponding to the method for identifying the effect of a countermeasure for reducing springback will be described with respect to a case where the effect of the countermeasure for reducing springback on the press-formed part 29a illustrated in Fig. 3(a) is identified with reference to a flowchart of Fig. 2 and additionally to Fig. 7.

An operator designates the press-formed part information file 13, serving as a target to be analyzed, through the input device 5 to the countermeasure effect identifying apparatus for reducing springback 1.

The countermeasure effect identifying apparatus for reducing springback 1 reads press-formed part information from the press-formed part information file 13. The pre-release residual stress distribution processing unit 19 calculates residual stress distribution data [Data D1] related to the pre-release shape 29b before the countermeasure for reducing springback (step S1). Since the press-formed part 29a is pressed by the die, there is still no released residual stress.

This step corresponds to a first pre-release residual stress distribution calculating step in the present invention.

Then, the after-release residual stress distribution processing unit 21 calculates residual stress distribution data [Data D2] related to the after-release shape 29c before the countermeasure for reducing springback (step S2). The residual stress distribution data [Data D2] contains data related to area of which residual stress is lower than that in the pre-release residual stress distribution data [Data D1], because the residual stress present before release has been partially released by release from the die. The released residual stress causes springback, which deforms the pre-release shape 29b into the after-release shape 29c.

This step corresponds to a first after-release residual stress distribution calculating step in the present invention.

Then, the residual stress distribution difference processing unit 23 converts the residual stress distributions indicated by [Data D1] and [Data D2] into the local coordinate system to calculate residual stress distribution difference data [Data D3] (step S3). The residual stress distribution difference data [Data D3] corresponds to a distribution of the difference between pre-release stress and after-release stress, namely, a distribution of stress released by springback.

For example, in the result of calculation in this step (refer to Fig. 7(a)), the color of curved portion of the press-formed part 29a is dark. This demonstrates that stress in this portion has been released by springback.

This step corresponds to a first residual stress distribution difference calculating step in the present invention.

Then, the pre-release residual stress distribution processing unit 19 calculates residual stress distribution data [Data D4] related to the pre-release shape 29b after the countermeasure for reducing springback (step S4).

This step corresponds to an after-countermeasure pre-release residual stress distribution calculating step in the present invention.

Then, the after-release residual stress distribution processing unit 21 calculates residual stress distribution data [Data D5] related to the after-release shape 29c after the countermeasure for reducing springback (step S5).

This step corresponds to an after-countermeasure after-release residual stress distribution calculating step in the present invention.

Then, the residual stress distribution difference processing unit 23 converts the residual stress distribution data items [Data D4] and [Data D5] into the local coordinate system to calculate residual stress distribution difference data [Data D6] (step S6). Like the residual stress distribution difference data [Data D3], the residual stress distribution difference data [Data D6] also corresponds to a distribution of the difference between pre-release stress and after-release stress, namely, a distribution of stress released by springback.

For example, in comparison between the result of calculation in this step (refer to Fig. 7(b)) and the foregoing result in Fig. 7(a), dark color portion differs from that in Fig. 7(a). This demonstrates that the countermeasure for reducing springback causes a difference in the distribution of stress released by springback.

This step corresponds to an after-countermeasure residual stress distribution difference calculating step in the present invention.

Then, the residual stress distribution difference variation processing unit 25 maps the residual stress distribution difference data [Data D6] onto shape data related to the pre-release residual stress distribution difference data to calculate mapping data [Data D7] (step 7).

Furthermore, the residual stress distribution difference variation processing unit 25 calculates residual stress distribution difference variation data [Data D8] on the basis of the residual stress distribution difference data [Data D3] and the mapping data [Data 7] (step 8).

Steps 7 and 8 correspond to a residual stress distribution difference variation calculating step in the present invention.

Then, the contour display processing unit 27 allows the display device 3 to display the residual stress distribution difference variation data [Data D8] in contour plots (step 9). Consequently, the operator can clearly identify which portion of the press-formed part 29a the countermeasure for reducing springback taken has affected and the extent to which a change in amount of springback has been achieved.

This step corresponds to a display step in the present invention.

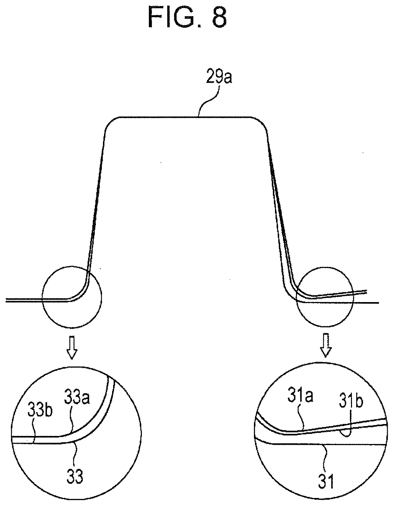

The result of the above-described process will be described below with reference to Figs. 7 and 8.

Referring to Fig. 8 that illustrates the hat-shaped cross-section of curved portion of the press-formed part 29a, an outer flange 33b is significantly closer to the outer flange 33 (target shape) than an outer flange 33a. Furthermore, Fig. 8 demonstrates that, although springback is seen in an inner flange 31b, the inner flange 31b is closer to the inner flange 31 (target shape) than an inner flange 31a. Accordingly, the amount of springback effectively reduced by the countermeasure for reducing springback taken is identified by springback analysis.

Which portion of the press-formed part 29a the countermeasure for reducing springback taken has affected and the extent to which the amount of springback has been changed will be described below.

In the result of contour display processing (refer to Fig. 7(c)), portion displayed in gray indicates a region in which the countermeasure for reducing springback has caused a variation in the difference between the pre-release residual stress and the after-release residual stress and gradation means that as the color is darker, the effect of the countermeasure for reducing springback is larger.

Fig. 7(c) demonstrates that stress released by springback is reduced across the press-formed part 29a and the extent of stress reduction in curved portion of the press-formed part 29a is significantly large. The countermeasure for reducing springback in the present embodiment is intended to reduce an amount of springback by application of tensile stress to the walls at the completion of press-forming. As can be seen from the figure, the tensile stress applied to the walls reduces stress released by springback across the press-formed part 29a, particularly in the curved portion. Specifically, it is understood that the taken countermeasure for reducing springback significantly affects a change in stress state across the press-formed part 29a, particularly in the curved portion and effectively reduces an amount of springback.

As described above, according to the present invention, it is possible to easily grasp how the countermeasure for reducing springback has affected a change in amount of springback in the press-formed part 29a and appropriately evaluate such an effect. Accordingly, the evaluated effect can be used as a guideline for a plan of a countermeasure for reducing springback for another press-formed part having a similar shape.

In the countermeasure for reducing springback taken in the present embodiment, the pre-countermeasure for reducing springback residual stress distribution difference data [Data D3] has a larger value than the after-countermeasure for reducing springback residual stress distribution difference data [Data D6] across the press-formed part 29a. Accordingly, the residual stress distribution difference variation data [Data D8] has a positive value across the press-formed part 29a and is displayed in a color meaning a positive value in Fig. 7(c). Consequently, the countermeasure for reducing springback taken in the present embodiment can be evaluated as a measure to effectively reduce stress released by springback across the press-formed part 29a.

In some cases, however, the pre-countermeasure for reducing springback residual stress distribution difference data [Data D3] may have a smaller value than the after-countermeasure for reducing springback residual stress distribution difference data [Data D6]. This means that stress released by springback is increased in the portions contrary to the above. In this case, the portions may be displayed in a color meaning a negative value. Consequently, it is clearly understood that the above-described countermeasure for reducing springback has an opposite effect on these portions with respect to a reduction in amount of springback. It is useful in identifying the effect of springback.

Furthermore, although the residual stress distribution difference data [Data D3] and the residual stress distribution difference data [Data D6] are used only as input data for distribution difference mapping in the present embodiment, these data items may be displayed on the display device 3 as illustrated in Fig. 7(a) and (b).

In the present embodiment, the first press-forming condition is the press-forming condition in which any countermeasure for reducing springback is not set. As regards identifying the effect of a countermeasure for reducing springback, if multiple countermeasure for reducing springbacks are set such that a certain countermeasure for reducing springback is set and another countermeasure for reducing springback is additionally set, it may be intended to identify the effect of the added press-forming condition.

In the invention of the present application, a state in which a countermeasure for reducing springback A has already been set may be set to a first press-forming condition and a state in which another countermeasure for reducing springback B is set may be set to an after-countermeasure press-forming condition. In this case, the effect of the countermeasure for reducing springback B premised on the countermeasure for reducing springback A can be identified.

In the present embodiment, although the after-countermeasure for reducing springback residual stress distribution difference data [Data D6] is mapped onto shape data related to the pre-countermeasure for reducing springback residual stress distribution difference data to calculate the mapping data [Data D7] in the distribution difference mapping, the pre-countermeasure for reducing springback residual stress distribution difference data [Data D3] may be mapped onto shape data related to the after-countermeasure for reducing springback residual stress distribution data to calculate mapping data [Data D7].

Furthermore, although the way of displaying in step 9 in the present embodiment is display in contour plots as an example, it is only required that residual stress distribution difference variation data is related to a change in amount of springback and such relation is displayed on data indicating the shape of a press-formed part such that the relation is visually identified. Another way of displaying may be used. For example, a distribution state may be represented using a variety of hatching patterns instead of a variety of colors representing the distribution state displayed in contour plots.

### Reference Numerals List

1 countermeasure effect identifying apparatus for reducing springback
3 display device
5 input device
7 storage device
9 working data memory
11 processor
13 press-forming part information file
15 data memory area
17 work area
19 pre-release residual stress distribution processing unit
21 after-release residual stress distribution processing unit
23 residual stress distribution difference processing unit
25 residual stress distribution difference variation processing unit
27 contour display processing unit
29a press-formed part
29b pre-release shape of press-formed part
29c after-release shape of press-formed part
31 inner flange (target shape)
31a inner flange in after-release shape of pre-countermeasure for reducing springback press-formed part
31b inner flange in after-release shape of after-countermeasure for reducing springback press-formed part
33 outer flange (target shape)
33a outer flange in after-release shape of pre-countermeasure for reducing springback press-formed part
33b outer flange in after-release shape of after-countermeasure for reducing springback press-formed part
35 die
35a die of pre-countermeasure for reducing springback
35b die of after-countermeasure for reducing springback
37 punch
37a punch of pre-countermeasure for reducing springback
37b punch of after-countermeasure for reducing springback
39 blank holder
41 blank
43 step

## Claims

1. A method for identifying the effect of a countermeasure for reducing springback in press-forming, the method comprising performing, by a processor (11), the steps of:
a first pre-release residual stress distribution calculating step (S1) of analyzing press-forming under a preset press-forming condition before the countermeasure for reducing springback is taken and calculating a residual stress distribution (D1) in a press-formed part to be released from a die;
a first after-release residual stress distribution calculating step (S2) of analyzing springback on the basis of the residual stress distribution (D1) calculated in the first pre-release residual stress distribution calculating step (S1) and calculating a residual stress distribution (D2) in the press-formed part released from the die;
a first residual stress distribution difference calculating step (S3) of calculating a difference (D3) between the residual stress distribution obtained in the first after-release residual stress distribution calculating step and that obtained in the first pre-release residual stress distribution calculating step;
an after-countermeasure pre-release residual stress distribution calculating step (S4) of analyzing press-forming under a press-forming condition reflecting the countermeasure, which is different from the above-mentioned preset press-forming condition, after the countermeasure for reducing springback is taken and calculating a residual stress distribution (D4) in a press-formed part to be released from the die;
an after-countermeasure after-release residual stress distribution calculating step (S5) of analyzing springback on the basis of the residual stress distribution (D4) calculated in the after-countermeasure pre-release residual stress distribution calculating step (S4) and calculating a residual stress distribution (D5) in the press-formed part released from the die;
an after-countermeasure residual stress distribution difference calculating step (S6) of calculating a difference (D6) between the residual stress distribution (D4) obtained in the after-countermeasure pre-release residual stress distribution calculating step and that (D5) obtained in the after-countermeasure after-release residual stress distribution calculating step;
a residual stress distribution difference variation calculating step (S8) of calculating a variation (D8) in the difference between the residual stress distributions on the basis of the difference between the residual stress distribution (D3) obtained in the first residual stress distribution difference calculating step and that (D6) obtained in the after-countermeasure residual stress distribution difference calculating step by mapping values of first residual stress distribution difference data to shape data related to the second residual stress distribution difference data, and calculating a stress difference on the basis of the mapped data and the second residual stress distribution difference data which is not subjected to mapping; and
a displaying step (S9) of relating each calculated value obtained in the residual stress distribution difference variation calculating step (S8) to a change in amount of springback and displaying, on a display device (3), the relation on data indicating the shape of the press-formed part such that the relation is visually identified.

2. An apparatus (1) for identifying the effect of a countermeasure for reducing springback in press-forming, the apparatus configured to execute a method according to claim 1.

## Patentansprüche

1. Verfahren zum Identifizieren der Wirkung einer Gegenmaßnahme zum Verringern von Rückverformung beim Pressformen, das Verfahren umfassend das Ausführen, durch einen Prozessor (11), der folgenden Schritte:
einen ersten Berechnungsschritt (S1) von Restspannungsverteilung vor der Entnahme zum Analysieren des Pressformens unter einer voreingestellten Pressformbedingung, bevor die Gegenmaßnahme zum Verringern von Rückverformung ergriffen wird, und zum Berechnen einer Restspannungsverteilung (D1) in einem pressgeformten Teil, das aus einem Formwerkzeug entnommen werden soll;
einen ersten Berechnungsschritt (S2) von Restspannungsverteilung nach der Entnahme zum Analysieren von Rückverformung auf der Grundlage der Restspannungsverteilung (D1), die im ersten Berechnungsschritt (S1) von Restspannungsverteilung vor der Entnahme berechnet wurde, und zum Berechnen einer Restspannungsverteilung (D2) im pressgeformten Teil, das aus dem Formwerkzeug entnommen wurde;
einen ersten Berechnungsschritt (S3) einer Restspannungsverteilungsdifferenz zum Berechnen einer Differenz (D3) zwischen der Restspannungsverteilung, die im ersten Berechnungsschritt von Restspannungsverteilung nach der Entnahme erhalten wurde, und jener, die im einen ersten Berechnungsschritt von Restspannungsverteilung vor der Entnahme erhalten wurde;
einen Berechnungsschritt (S4) von Restspannungsverteilung nach der Gegenmaßnahme und vor der Entnahme zum Analysieren des Pressformens unter einer Pressformbedingung, die die Gegenmaßnahme wiedergibt und sich von der oben genannten voreingestellten Pressformbedingung unterscheidet, nachdem die Gegenmaßnahme zum Verringern von Rückverformung ergriffen wurde, und zum Berechnen einer Restspannungsverteilung (D4) in einem pressgeformten teil, das aus dem Formwerkzeug entnommen werden soll;
einen Berechnungsschritt (S5) von Restspannungsverteilung nach der Gegenmaßnahme und nach der Entnahme zum Analysieren von Rückverformung auf der Grundlage der Restspannungsverteilung (D4), die im Berechnungsschritt (S4) von Restspannungsverteilung nach der Gegenmaßnahme und vor der Entnahme berechnet wurde, und zum Berechnen einer Restspannungsverteilung (D5) im pressgeformten Teil, das aus dem Formwerkzeug entnommen wurde;
einen Berechnungsschritt (S6) einer Restspannungsverteilungsdifferenz (D6) nach der Gegenmaßnahme zwischen der Restspannungsverteilung (D4), die im Berechnungsschritt von Restspannungsverteilung nach der Gegenmaßnahme und vor der Entnahme erhalten wurde, und jener (D5), die im Berechnungsschritt von Restspannungsverteilung nach der Gegenmaßnahme und nach der Entnahme erhalten wurde;
einen Berechnungsschritt (S8) von Restspannungsverteilungsdifferenzvariation zum Berechnen einer Variation (D8) der Differenz zwischen den Restspannungsverteilungen auf der Grundlage der Differenz zwischen der Restspannungsdifferenz (D3), die im ersten Berechnungsschritt der Restspannungsverteilungsdifferenz erhalten wurde, und jener (D6), die im Berechnungsschritt der Restspannungsverteilungsdifferenz nach der Gegenmaßnahme erhalten wurde, durch Abbilden von Werten von ersten Restspannungsverteilungsdifferenzdaten auf Formdaten, die den zweiten Restspannungsverteilungsdifferenzdaten zugehören, und zum Berechnen einer Spannungsdifferenz auf der Grundlage der abgebildeten Daten und der zweiten Restspannungsverteilungsdifferenzdaten, die keiner Abbildung unterzogen werden; und
einen Anzeigeschritt (S9) zum Beziehen von jedem berechneten Wert, der im Berechnungsschritt (S8) der Restspannungsverteilungsdifferenzvariation erhalten wurde, auf eine Änderung der Rückverformungsmenge, und zum Anzeigen, auf einem Anzeigegerät (3), der Beziehung auf Daten, die die Form des pressgeformten Teils anzeigen, sodass die Beziehung visuell identifiziert wird.

2. Verrichtung (1) zum Identifizieren der Wirkung einer Gegenmaßnahme zum Verringern von Rückverformung beim Pressformen, wobei die Vorrichtung zum Ausführen eines Verfahrens nach Anspruch 1 konfiguriert ist.

## Revendications

1. Procédé pour identifier l'effet d'une contre-mesure pour réduire un retour élastique lors d'un formage à la presse, le procédé comprenant d'effectuer, par un processeur (11), les étapes consistant à :
une première étape (S1) de calcul de distribution de contrainte résiduelle avant libération consistant à analyser le formage à la presse dans une condition de formage à la prédéfinie avant d'effectuer la contre-mesure destinée à réduire un retour élastique et à calculer une distribution de contrainte résiduelle (D1) dans une partie formée à la presse à libérer d'une matrice ;
une première étape (S2) de calcul de distribution de contrainte résiduelle après libération consistant à analyser un retour élastique sur la base de la distribution de contrainte résiduelle (D1) calculée lors de la première étape de calcul de distribution de contrainte résiduelle avant libération (S1) et à calculer une distribution de contrainte résiduelle (D2) dans la pièce formée à la presse libérée de la matrice ;
une première étape (S3) de calcul de différence de distribution de contrainte résiduelle consistant à calculer une différence (D3) entre la distribution de contrainte résiduelle obtenue lors de la première étape de calcul de distribution de contrainte résiduelle après libération et celle obtenue lors de la première étape de calcul de distribution de contrainte résiduelle avant libération ;
une étape (S4) de calcul de distribution de contrainte résiduelle avant libération après contre-mesure consistant à analyser un formage à la presse dans une condition de formage à la presse reflétant la contre-mesure, qui est différente de la condition de formage à la presse prédéfinie mentionnée ci-dessus, après que la contre-mesure pour réduire un retour élastique soit effectuée et à calculer une distribution de contrainte résiduelle (D4) dans une partie formée à la presse à libérer de la matrice ;
une étape (S5) de calcul de distribution de contrainte résiduelle après libération après contre-mesure consistant à analyser un retour élastique sur la base de la distribution de contrainte résiduelle (D4) calculée lors de l'étape (S4) de calcul de distribution de contrainte résiduelle avant libération après contre-mesure et à calculer une distribution de contrainte résiduelle (D5) dans la partie formée sous pression libérée de la matrice ;
une étape (S6) de calcul de différence de distribution de contrainte résiduelle après contre-mesure consistant à calculer une différence (D6) entre la distribution de contrainte résiduelle (D4) obtenue lors de l'étape de calcul de distribution de contrainte résiduelle avant libération après contre-mesure, et celle (D5) obtenue lors de l'étape de calcul de distribution de contrainte résiduelle après libération après contre-mesure ;
une étape (S8) de calcul de variation de différence de distribution de contrainte résiduelle consistant à calculer une variation (D8) de la différence entre les distributions de contrainte résiduelle sur la base de la différence entre la distribution de contrainte résiduelle (D3) obtenue lors de la première étape de calcul de différence de distribution de contrainte résiduelle et celle (D6) obtenue lors de l'étape de calcul de différence de distribution de contrainte résiduelle après contre-mesure en mappant des valeurs de premières données de différence de distribution de contrainte résiduelle pour mettre en forme des données associées aux secondes données de différence de distribution de contrainte résiduelle, et à calculer une différence de contrainte sur la base des données mappées et des secondes données de différence de distribution de contrainte résiduelle qui ne sont pas soumises au mappage ; et
une étape d'affichage (S9) consistant à associer chaque valeur calculée obtenue lors de l'étape (S8) de calcul de variation de différence de distribution de contrainte résiduelle à un changement de quantité de retour élastique et à afficher, sur un dispositif d'affichage (3), la relation entre des données indiquant la forme de la partie formée sous à la presse de telle sorte que la relation est identifiée visuellement.

2. Appareil (1) pour identifier l'effet d'une contre-mesure pour réduire un retour élastique lors d'un formage à la presse, l'appareil étant configuré pour exécuter un procédé selon la revendication 1.
